# EUROPEAN PATENT APPLICATION

(11) **EP 4 657 567 A1**
(43) Date of publication of application: **03.12.2025**
(21) Application number: 25179201.6
(22) Date of filing: 27.05.2025
(51) Int. Cl.: H01M 4/505, H01M 4/525, H01M 10/0525, H01M 10/0567, H01M 10/0568, H01M 10/0569

(54) **ELECTROCHEMICAL DEVICE AND ELECTRONIC DEVICE**

(30) Priority: 28.05.2024 CN 202410674355
(71) Applicant: Ningde Amperex Technology Ltd., Ningde City, Fujian Province 352100 (CN)
(72) Inventor: ZHOU, Juan, 352100 Ningde City, Fujian Province (CN); CHENG, Shiyang, 352100 Ningde City, Fujian Province (CN); ZHANG, Hui, 352100 Ningde City, Fujian Province (CN); LI, Gaofeng, 352100 Ningde City, Fujian Province (CN)
(74) Representative: Icosa

(57) **Abstract**

An electrochemical device includes a positive electrode plate. The positive electrode plate includes a positive active material layer. The positive active material layer includes a positive active material. The positive active material contains three elements Li, Ni, and Mn. A molar fraction of Li in the positive active material is a, a molar fraction of Ni in the positive active material is b, a molar fraction of Mn in the positive active material is c, a value of b/a is 0.4 to 0.6, and a value of b/c is 0.8 to 1.2.

## Description

### TECHNICAL FIELD

This application relates to the field of electrochemical energy storage, and in particular, to an electrochemical device and an electronic device.

### BACKGROUND

With the development of electrochemical energy storage technology, higher requirements have been imposed on the cycle performance and safety performance of electrochemical devices (such as a lithium-ion battery). Typically, increasing the voltage of an electrochemical device is an effective approach to increasing the energy density of the electrochemical device. However, after the voltage of the electrochemical device is increased, problems may arise such as release of oxygen from a positive electrode, decomposition of an electrolyte solution, gas generated by an electrode assembly, and a sharp decline in cycle performance. Therefore, it is expected to further improve the cycle performance and high-temperature storage performance of electrochemical devices.

### SUMMARY

This application provides an electrochemical device. The electrochemical device includes a positive electrode plate. The positive electrode plate includes a positive active material layer. The positive active material layer includes a positive active material. The positive active material contains three elements Li, Ni, and Mn. A molar fraction of Li in the positive active material is a, a molar fraction of Ni in the positive active material is b, a molar fraction of Mn in the positive active material is c, a value of b/a is 0.4 to 0.6, and a value of b/c is 0.8 to 1.2. By making the value of b/a range from 0.4 to 0.6 and the value of b/c from 0.8 to 1.2, this application enhances the structural stability of the positive active material, thereby improving cycle performance and high-temperature storage performance of the electrochemical device. Further preferably, the value of b/c is 1 to 1.2.

In some embodiments, a dQ/dV-V curve of the electrochemical device during discharge exhibits at least one peak at a voltage greater than or equal to 4.1 V. When the dQ/dV-V curve of the electrochemical device during discharge exhibits at least one peak at a voltage greater than or equal to 4.1 V, it indicates that the positive active material is an active material that contains no cobalt and contains a medium level of nickel content, that is, a cobalt-free medium-nickel material. The active material can achieve a high capacity at the same level as a high-nickel positive active material.

In some embodiments, the electrochemical device further includes an electrolyte solution. The electrolyte solution includes at least one of a fluorinated solvent, an ester-based solvent, or a lithium salt additive. The fluorinated solvent includes at least one of fluoroethylene carbonate, difluoroethylene carbonate, fluorodiethyl carbonate, fluoroethyl methyl carbonate, trifluoropropylene carbonate, or fluorodimethyl carbonate. The fluorinated solvents is characterized by high oxidation resistance, and can reduce the interface reaction activity between the positive active material and the electrolyte solution. In some embodiments, the ester-based solvent includes at least one of ethylene carbonate, diethyl carbonate, ethyl methyl carbonate, propylene carbonate, or dimethyl carbonate. The ester-based solvents can improve the cycle performance and high-temperature storage performance of the electrochemical device to varying degrees, especially the high-temperature storage performance. In some embodiments, the lithium salt additive includes at least one of lithium bis(fluorosulfonyl)imide, lithium bis(oxalato)borate, lithium difluoro(oxalato)borate, or lithium perchlorate. The lithium salt additives are conducive to maintaining the lithium salt concentration in the electrolyte solution, thereby improving the cycle performance of the electrochemical device.

In some embodiments, when the electrolyte solution includes a fluorinated solvent, based on a total mass of the electrolyte solution, a mass percent of the fluorinated solvent is 50% to 90%. When the mass percent of the fluorinated solvent in the electrolyte solution is greater than 90%, the viscosity of the electrolyte solution increases, and the impedance deteriorates, thereby deteriorating the cycle performance of the electrochemical device. When the mass percent of the fluorinated solvent in the electrolyte solution is less than 50%, the effect of the fluorinated solvent on improving the cycle performance and high-temperature storage performance of the electrochemical device is relatively limited. Based on the total mass of the electrolyte solution, the mass percent of the fluorinated solvent is further preferably 50% to 80%.

In some embodiments, when the electrolyte solution includes an ester-based solvent, based on the total mass of the electrolyte solution, a mass percent of the ester-based solvent is 2% to 10%. When the mass percent of the ester-based solvent in the electrolyte solution is greater than 10%, the interface impedance deteriorates, thereby adversely affecting the kinetic performance of the electrochemical device. When the mass percent of the ester-based solvent in the electrolyte solution is less than 2%, the effect of the ester-based solvent on improving the cycle performance and high-temperature storage performance of the electrochemical device is relatively limited.

In some embodiments, when the electrolyte solution includes a lithium salt additive, a mass percent of the lithium salt additive in the electrolyte solution is 0.1% to 1%. When the mass percent of the lithium salt additive in the electrolyte solution is greater than 1%, the viscosity of the electrolyte solution increases, thereby reducing the migration rate of lithium ions. In addition, the interaction between anions and cations in the electrolyte solution is enhanced, thereby reducing the number of free lithium ions, and in turn, reducing the conductivity of the electrolyte solution. At the same time, the viscosity of the electrolyte solution increases, thereby deteriorating the infiltration effect of the electrolyte solution on the positive and negative electrode plates, and in turn, aggravating the internal resistance. When the mass percent of the lithium salt additive in the electrolyte solution is less than 0.1%, the effect of the lithium salt additive on improving the cycle performance of the electrochemical device is relatively limited.

In some embodiments, when the positive electrode plate is characterized by X-ray diffraction in a fully charged state of the electrochemical device, a diffraction peak A is exhibited in a diffraction angle range of 36.3° to 37.3°, a peak intensity of the diffraction peak A is I_{A}, a diffraction peak B is exhibited in a diffraction angle range of 43.6° to 44.6°, a peak intensity of the diffraction peak B is I_{B}, and a value of I_{A}/I_{B} is 1.5 to 2. When the value of I_{A}/I_{B} is 1.5 to 2, the value improves the cycle performance and high-temperature storage performance of the electrochemical device.

In some embodiments, the positive active material is a secondary particle formed by aggregation of primary particles, and an average diameter of the positive active material is 8 µm to 12 µm. If the average diameter of the positive active material is excessively large, the compaction density of the positive active material layer will be excessively small, thereby reducing the energy density. If the average diameter of the positive active material is excessively small, the compaction density of the positive active material layer will be excessively large, thereby being prone to cause particle fragmenting, increase the specific surface area of the material, aggravate the release of transition metal on the positive electrode, disrupt the structure of the positive electrode, and deteriorate the cycle performance of the electrochemical device. In addition, due to the increase in compaction density, the porosity of the electrode plate decreases, and the infiltration effect of the electrolyte solution is prone to be inferior, thereby deteriorating the cycle performance of the electrochemical device.

In some embodiments, after the electrochemical device is discharged, the positive active material included in the positive electrode plate in a fully discharged state includes an M element, a molar fraction of the M element in the positive active material is d, the M element includes at least one of Na, K, or Mg, an aggregate molar fraction of Ni, Co, and Mn in the positive active material is e, and a value of d/e is 0.1 to 0.2. If the doping content of the M element is excessively high, the reversible capacity of the positive active material will deteriorate. If the doping content of the M element is excessively low, the improvement in the structural stability of the positive active material is not significant, and is not enough to significantly improve the cycle performance of the positive active material.

An embodiment of this application further provides an electronic device, including the electrochemical device.

By making the value of b/a range from 0.4 to 0.6 and the value of b/c from 0.8 to 1.2, this application enhances the structural stability of the positive active material, thereby improving cycle performance and high-temperature storage performance of the electrochemical device.

The "fully charged state" in this application means state after the electrochemical device is charged at a constant current of 0.5C at 25 °C until the voltage reaches 4.35 V and then charged at a constant voltage of 4.35 V until the current drops to 0.01C. The "fully discharged state" in this application means a state after the electrochemical device is discharged at a constant current of 0.5C at 25 °C until the voltage drops to 2.8 V.

### BRIEF DESCRIPTION OF DRAWINGS

FIG. 1 is a discharge curve of an electrochemical device according to Embodiment 6 of this application;
FIG. 2 is a cross-section polishing scanning electron microscope (SEM) image of a positive electrode plate according to Embodiment 6 of this application; and
FIG. 3 is an X-ray diffraction (XRD) pattern of a positive electrode plate of an electrochemical device in a fully charged state according to Embodiment 6 of this application.

### DETAILED DESCRIPTION

The following embodiments enable a person skilled in the art to understand this application more comprehensively, but without limiting this application in any way.

This application provides an electrochemical device. The electrochemical device includes a positive electrode plate. In some embodiments, the positive electrode plate includes a positive active material layer. The positive active material layer includes a positive active material. The positive active material contains three elements Li, Ni, and Mn. In some embodiments, the positive active material contains no cobalt. In some embodiments, a molar fraction of Li in the positive active material is a, a molar fraction of Ni in the positive active material is b, a molar fraction of Mn in the positive active material is c, a value of b/a is 0.4 to 0.6, and a value of b/c is 0.8 to 1.2. By making the value of b/a range from 0.4 to 0.6 and the value of b/c from 0.8 to 1.2, this application enhances the structural stability of the positive active material, thereby improving cycle performance and high-temperature storage performance of the electrochemical device. In some embodiments, the value of b/c is 1 to 1.2.

In some embodiments, a dQ/dV-V curve of the electrochemical device during discharge exhibits at least one peak at a voltage greater than or equal to 4.1 V. When the dQ/dV-V curve of the electrochemical device during discharge exhibits at least one peak at a voltage greater than or equal to 4.1 V, it indicates that the positive active material is an active material that contains no cobalt and contains a medium level of nickel content, that is, a cobalt-free medium-nickel material. The active material can achieve a high capacity at the same level as a high-nickel positive active material.

In some embodiments, the electrochemical device further includes an electrolyte solution. The electrolyte solution includes at least one of a fluorinated solvent, an ester-based solvent, or a lithium salt additive. In some embodiments, the fluorinated solvent includes at least one of fluoroethylene carbonate, difluoroethylene carbonate, fluorodiethyl carbonate, fluoroethyl methyl carbonate, trifluoropropylene carbonate, or fluorodimethyl carbonate. The fluorinated solvents is characterized by high oxidation resistance, and can reduce the interface reaction activity between the positive active material and the electrolyte solution. In some embodiments, when the electrolyte solution includes a fluorinated solvent, the mass percent of the fluorinated solvent in the electrolyte solution is 50% to 90%. In some embodiments, the mass percent of the fluorinated solvent in the electrolyte solution is 50%, 55%, 60%, 65%, 70%, 75%, 80% 85%, 90%, or a value falling within a range formed by any two thereof. When the mass percent of the fluorinated solvent in the electrolyte solution is greater than 90%, the viscosity of the electrolyte solution increases, and the impedance deteriorates, thereby deteriorating the cycle performance of the electrochemical device. When the mass percent of the fluorinated solvent in the electrolyte solution is less than 50%, the effect of the fluorinated solvent on improving the cycle performance and high-temperature storage performance of the electrochemical device is relatively limited. In some embodiments, when the electrolyte solution includes a fluorinated solvent, the mass percent of the fluorinated solvent in the electrolyte solution is 50% to 80%.

In some embodiments, the ester-based solvent includes at least one of ethylene carbonate, diethyl carbonate, ethyl methyl carbonate, propylene carbonate, or dimethyl carbonate. The ester-based solvents can improve the cycle performance and high-temperature storage performance of the electrochemical device to varying degrees, especially the high-temperature storage performance. In some embodiments, when the electrolyte solution includes an ester-based solvent, the mass percent of the ester-based solvent in the electrolyte solution is 2% to 10%. In some embodiments, the mass percent of the ester-based solvent in the electrolyte solution is 2%, 3%, 4%, 5%, 6%, 7%, 8%, 9%, 10%, or a value falling within a range formed by any two thereof. When the mass percent of the ester-based solvent in the electrolyte solution is greater than 10%, the interface impedance deteriorates, thereby adversely affecting the kinetic performance of the electrochemical device. When the mass percent of the ester-based solvent in the electrolyte solution is less than 2%, the effect of the ester-based solvent on improving the cycle performance and high-temperature storage performance of the electrochemical device is relatively limited.

In some embodiments, the lithium salt additive includes at least one of lithium bis(fluorosulfonyl)imide, lithium bis(oxalato)borate, lithium difluoro(oxalato)borate, or lithium perchlorate. The lithium salt additives are conducive to maintaining the lithium salt concentration in the electrolyte solution, thereby improving the cycle performance of the electrochemical device. In some embodiments, when the electrolyte solution includes a lithium salt additive, a mass percent of the lithium salt additive in the electrolyte solution is 0.1% to 1%. In some embodiments, the mass percent of the lithium salt additive in the electrolyte solution is 0.1%, 0.3%, 0.4%, 0.5%, 0.6%, 0.7%, 0.8% 0.9%, 1%, or a value falling within a range formed by any two thereof. When the mass percent of the lithium salt additive in the electrolyte solution is greater than 1%, the viscosity of the electrolyte solution increases, thereby reducing the migration rate of lithium ions. In addition, the interaction between anions and cations in the electrolyte solution is enhanced, thereby reducing the number of free lithium ions, and in turn, reducing the conductivity of the electrolyte solution. At the same time, the viscosity of the electrolyte solution increases, thereby deteriorating the infiltration effect of the electrolyte solution on the positive and negative electrode plates, and in turn, aggravating the internal resistance. When the mass percent of the lithium salt additive in the electrolyte solution is less than 0.1%, the effect of the lithium salt on improving the cycle performance of the electrochemical device is relatively limited.

In some embodiments, when the positive electrode plate is characterized by X-ray diffraction in a fully charged state of the electrochemical device, a diffraction peak A is exhibited in a diffraction angle range of 36.3° to 37.3°, a peak intensity of the diffraction peak A is I_{A}, a diffraction peak B is exhibited in a diffraction angle range of 43.6° to 44.6°, a peak intensity of the diffraction peak B is I_{B}, and a value of I_{A}/I_{B} is 1.5 to 2. When the value of I_{A}/I_{B} is 1.5 to 2, the value improves the cycle performance and high-temperature storage performance of the electrochemical device.

In some embodiments, the positive active material is a secondary particle formed by aggregation of primary particles, and an average diameter of the positive active material is 8 µm to 12 µm. If the average diameter of the positive active material is excessively large, the compaction density of the positive active material layer will be excessively small, thereby reducing the energy density. If the average diameter of the positive active material is excessively small, the compaction density of the positive active material layer will be excessively large, thereby being prone to cause particle fragmenting, increase the specific surface area of the material, aggravate the release of transition metal on the positive electrode, disrupt the structure of the positive electrode, and deteriorate the cycle performance of the electrochemical device. In addition, due to the increase in compaction density, the porosity of the electrode plate decreases, and the infiltration effect of the electrolyte solution is prone to be inferior, thereby deteriorating the cycle performance of the electrochemical device.

In some embodiments, after the electrochemical device is discharged, the positive active material included in the positive electrode plate in a fully discharged state includes an M element, a molar fraction of the M element in the positive active material is d, the M element includes at least one of Na, K, or Mg, an aggregate molar fraction of Ni, Co, and Mn in the positive active material is e, and a value of d/e is 0.1 to 0.2. If the doping content of the M element is excessively high, the reversible capacity of the positive active material will deteriorate. If the doping content of the M element is excessively low, the improvement in the structural stability of the positive active material is not significant, and is not enough to significantly improve the cycle performance of the positive active material.

In some embodiments, the positive electrode plate may further include a positive current collector. The positive active material layer is disposed on one side or both sides of the positive current collector. In some embodiments, the positive current collector may be an aluminum foil, or may be another positive current collector commonly used in this field. In some embodiments, the thickness of the positive current collector may be 1 µm to 50 µm. In some embodiments, the positive current collector may be connected to the positive active material layer by a bottom coating. Alternatively, the positive current collector may be directly connected to the positive active material layer.

In some embodiments, the positive active material layer may further include a conductive agent and a binder. In some embodiments, the conductive agent in the positive active material layer may include at least one of conductive carbon black, conductive graphite, graphene, or carbon nanotubes. In some embodiments, the binder in the positive active material layer may include at least one of polyvinylidene difluoride (PVDF), polytetrafluoroethylene (PTFE), polyvinyl butyral (PVB), poly(ethylene-co-vinyl acetate) (EVA), or polyvinyl alcohol (PVA). In some embodiments, a mass ratio between the positive active material, the conductive agent, and the binder is (80 to 99) : (0.1 to 10) : (0.1 to 10), but this is merely an example, and any other appropriate mass ratio may apply.

In some embodiments, the electrochemical device may further include a negative current collector and a separator. The separator is disposed between the positive electrode plate and the negative electrode plate. In some embodiments, the negative electrode plate includes a negative current collector and a negative active material layer. The negative active material layer is disposed on one side or both sides of the negative current collector. In some embodiments, the negative current collector may be at least one of a copper foil, a nickel foil, or a carbon-based current collector. In some embodiments, the negative active material layer may include a negative active material, a conductive agent, and a binder. In some embodiments, the negative active material may include at least one of graphite or a silicon-based material. In some embodiments, the silicon-based material includes at least one of silicon, a silicon-oxygen material, a silicon-carbon material, or a silicon-oxygen-carbon material. In some embodiments, the conductive agent in the negative active material layer may include at least one of conductive carbon black, Ketjen black, graphite flakes, graphene, acetylene black, carbon nanotubes, or carbon fiber. In some embodiments, the binder in the negative active material layer may include at least one of styrene-butadiene rubber (SBR), polyvinylidene difluoride (PVDF), polytetrafluoroethylene (PTFE), polyvinyl butyral (PVB), water-based acrylic resin, or carboxymethyl cellulose (CMC). In some embodiments, a mass ratio between the negative active material, the conductive agent, and the binder in the negative active material layer may be (78 to 98.5): (0.1 to 10): (0.1 to 10). Understandably, the materials and mass ratio specified above are merely exemplary, and any other appropriate materials and mass ratio may be used instead.

In some embodiments, the separator includes a porous substrate layer and a heat-resistant layer. In some embodiments, the porous substrate layer includes at least one of polyethylene, polypropylene, polyethylene terephthalate, polyimide, or aramid fiber. In some embodiments, the thickness of the separator falls within a range of 3 µm to 20 µm. In some embodiments, the pore diameter of the porous substrate layer falls within a range of 0.01 µm to 1 µm.

In some embodiments, the heat-resistant layer includes inorganic particles and a binder. The inorganic particles are at least one selected from aluminum oxide (Al₂O₃), silicon oxide (SiO₂), magnesium oxide (MgO), titanium oxide (TiO₂), hafnium dioxide (HfO₂), tin oxide (SnO₂), ceria (CeO₂), nickel oxide (NiO), zinc oxide (ZnO), calcium oxide (CaO), zirconium oxide (ZrO₂), yttrium oxide (Y₂O₃), silicon carbide (SiC), boehmite, aluminum hydroxide, magnesium hydroxide, calcium hydroxide, and barium sulfate. The binder in the heat-resistant layer is at least one selected from polyvinylidene fluoride, poly(vinylidene fluoride-co-hexafluoropropylene), polyamide, polyacrylonitrile, acrylic ester polymer, polyacrylic acid, sodium polyacrylate, sodium carboxymethyl cellulose, polyvinylpyrrolidone, polyvinyl ether, polytetrafluoroethylene, or polyhexafluoropropylene.

In some embodiments of this application, the electrochemical device includes, but is not limited to, a lithium-ion battery. In some embodiments, the electrolyte solution may further include a nonaqueous solvent. The nonaqueous solvent may be a carbonate ester compound, a carboxylate ester compound, an ether compound, another organic solvent, or any combination thereof.

The carbonate ester compound may be a chain carbonate ester compound, a cyclic carbonate ester compound, a fluorocarbonate ester compound, or any combination thereof.

Examples of the chain carbonate ester compound are diethyl carbonate (DEC), dimethyl carbonate (DMC), dipropyl carbonate (DPC), methyl propyl carbonate (MPC), ethylene propyl carbonate (EPC), ethyl methyl carbonate (EMC), or any combination thereof. Examples of the cyclic carbonate ester compound are ethylene carbonate (EC), propylene carbonate (PC), butylene carbonate (BC), vinyl ethylene carbonate (VEC), or any combination thereof. Examples of the fluorocarbonate ester compound are fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, trifluoromethyl ethylene carbonate, or any combination thereof.

Examples of the carboxylate compound are methyl acetate, ethyl acetate, n-propyl acetate, tert-butyl acetate, methyl propionate, ethyl propionate, propyl propionate, γ-butyrolactone, decanolactone, valerolactone, mevalonolactone, caprolactone, methyl formate, or any combination thereof.

Examples of the ether compound are dibutyl ether, tetraglyme, diglyme, 1,2-dimethoxyethane, 1,2-diethoxyethane, ethoxy-methoxyethane, 2-methyltetrahydrofuran, tetrahydrofuran, or any combination thereof.

Examples of the other organic solvent are dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or any combination thereof.

An embodiment of this application further provides an electronic device containing the electrochemical device. The electronic device is not particularly limited herein, and may be any electronic device known in the prior art. In some embodiments, the electronic device may include, but is not limited to, a laptop computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, unmanned aerial vehicle, lighting appliance, toy, game console, watch, electric tool, flashlight, camera, large household battery, lithium-ion capacitor, or the like.

Some specific embodiments are enumerated below to give a clearer description of this application, using a lithium-ion battery as an example.

### Embodiment 1

Preparing a negative electrode plate: Artificial graphite, conductive carbon black, and polyvinylidene difluoride (PVDF) are mixed at a mass ratio of 97 : 1 : 2, and dispersed in deionized water to formulate a negative electrode slurry in which the solid content of 0.8. After being well stirred, the negative electrode slurry is evenly applied onto one surface of negative current collector copper foil, and dried at 80 °C to obtain a negative electrode plate coated with a negative active material layer on a single side. The above steps are repeated on the other side of the copper foil to obtain a negative electrode plate coated with the negative active material layer on both sides. The negative electrode plate is cold-pressed and slit, and tabs are welded to the electrode plate to obtain a finished negative electrode plate.

Preparing a positive electrode plate: A positive active material, conductive carbon black, carbon nanotubes, and polyvinylidene difluoride are mixed at a mass ratio of 93.7 : 2.8 : 1.2 : 2.3, and dispersed in N-methyl-pyrrolidone to formulate a positive electrode slurry in which the solid content is 0.71. After being well stirred and mixed, the positive electrode slurry is evenly applied onto one surface of positive current collector aluminum foil, and dried at 90 °C to obtain a positive electrode plate coated with a positive active material layer on a single side. The above steps are repeated on the other surface of the aluminum foil to obtain a positive electrode plate coated with the positive active material layer on both sides. The positive electrode plate is cold-pressed and slit, and tabs are welded to the electrode plate to obtain a finished positive electrode plate.

Steps of preparing the positive active material are as follows:
1) A mixed solution containing NiSO₄ and MnSO₄ is prepared at a molar ratio of Ni : Mn = 50 : 50, with the NiSO₄ added in an amount of 1.55 kg and the MnSO₄ in an amount of 1.51 kg. The mixed solution is mixed with a precipitant (NaOH solution) and a complexant (ammonia water) to react. The reaction time is controlled to be 60 hours, the ammonia concentration is 1 mol/L, and the pH value is 12.2, so as to obtain a nickel-manganese precursor TM(OH)₂ (TM = Ni/Mn) with an average particle diameter Dᵥ₅₀ of 11 µm.
2) The nickel-manganese precursor and sodium carbonate are ground and mixed well at a molar ratio of 1 : 0.5, with the precursor added in an amount of 9.1 kg and the sodium carbonate in an amount of 5.4 kg. The mixture is calcined at 800 °C in an air atmosphere for 20 hours, and then the calcined product is pulverized, sieved, and demagnetized to obtain product I.
3) The product I is mixed with a mixture of lithium hydroxide and lithium nitrate (at a molar ratio of 5 : 5). The mass ratio of the mixture of lithium hydroxide and lithium nitrate to the product I is 10 : 1. The mixture is heated to 400 °C at a rate of 10 °C/min. The temperature is kept for 6 hours, and then the mixture is quenched to room temperature at a cooling rate of 50 °C/min in a mixed atmosphere of Ar and air (the volume ratio of Ar to air is 1 : 2) to obtain a product II.
4) The product II is washed and soaked in deionized water, and then dried.
5) The product II is finally pulverized and sieved to obtain a positive active material in which the molar ratio of Na to (Ni+Mn) is 10.7%. The Dᵥ₅₀ of the material is 9.4 µm.

Preparing a separator: An 8 µm-thick porous polyethylene (PE) film is used as a separator.

Preparing an electrolyte solution: Lithium hexafluorophosphate is mixed with a nonaqueous organic solvent in an argon atmosphere glovebox in which the water content is less than 10 ppm. The nonaqueous organic solvent is a mixture of ethylene carbonate (EC), propylene carbonate (PC), diethyl carbonate (DEC), propyl propionate (PP), and ethyl propionate (EP) mixed at a mass ratio of 1 : 1 : 1 : 1 : 1, and the mixture is mixed well to formulate an electrolyte solution in which the mass percent of lithium hexafluorophosphate is 12.5%. In addition, the electrolyte solution constituents may be added in the corresponding amount as required according to Table 1.

Preparing a lithium-ion battery: The positive electrode plate, the separator, and the negative electrode plate are stacked in sequence in such a way that the separator is located between the positive electrode plate and the negative electrode plate to serve a function of separation, and then the stacked structure is wound to obtain an electrode assembly. The electrode assembly is placed in an aluminum laminated film that serves as an outer package. The electrode assembly is dehydrated at 80 °C, and then the above electrolyte solution is injected into the package, and the package is sealed. Processes such as chemical formation, degassing, and shaping are performed to obtain a lithium-ion battery.

Except for the differences shown in Table 1, the parameters in Embodiments 2 to 38 and Comparative Embodiments 1 to 4 are the same as those in Embodiment 1.

In addition, in this application, the corresponding parameters are measured by using the following methods.

### 1) Particle morphology and average diameter:

A positive electrode plate is sectioned longitudinally by means of ion polishing, and then the morphology of the positive active material particles in the cross-section of the positive electrode plate is observed by using a scanning electron microscope (instrument model: ZEISS SEM, acceleration voltage: 0.1 KV to 30 KV). In an image of the cross-section, 50 positive active material particles are randomly selected. The average value of the longest diameters of the particles is used as the average diameter of the positive active material.

### 2) Element content

For an initial positive active material, the positive active material is dissolved by using a mixed solvent (for example, 0.4 g of positive active material is dissolved in a mixed solvent of 10 ml of aqua regia (nitric acid and hydrochloric acid mixed at a ratio of 1 : 1) and 2 ml of hydrofluoric acid HF). The solution is diluted to a final volume of 100 mL, and then the content of each element in the solution is determined using an inductively coupled plasma (ICP) analyzer.

For the positive active material in the positive electrode plate, the positive electrode plate is sectioned longitudinally by means of ion polishing, and then the cross-section of the positive electrode plate is observed using a ZEISS scanning electron microscope (SEM). The positive active material is tested with an energy dispersive spectrometer (EDS) to determine the element content in the positive active material.

### 3) dQ/dV test

A lithium-ion battery is charged at a constant current of 0.1C rate at 25 °C until the voltage reaches 4.35 V, and then discharged at a rate of 0.1C until the voltage drops to 2.8 V. The differential capacity curve (dQ/dV curve) is obtained by differentiating the capacity-voltage curve (Q-V curve).

### 4) X-ray diffraction test

A lithium-ion battery is fully discharged, and then disassembled to obtain a positive electrode plate. The positive electrode plate is analyzed by means of X-ray diffraction using an X-ray diffractometer (model: Bruker D8 ADVANCE, target material: Cu Kα, scanning angle: 5-80°).

### 5) Cycle performance test

A lithium-ion battery is initially charged and discharged in a 45 °C environment first. The battery is charged at a constant current of 0.5C until the voltage reaches 4.35 V, and then charged at a constant voltage until the current drops to 0.05C, and then discharged at a constant current of 0.5C until the voltage drops to 2.8 V, thereby completing one charge-and-discharge cycle. The above charge-and-discharge cycle is repeated. The discharge capacity at the end of the 3^{rd} cycle and the discharge capacity at the end of the 400^{th} cycle are recorded. 45 °C cycle capacity retention rate = (400th-cycle discharge capacity/3rd-cycle discharge capacity) × 100%.

### 6) High-temperature storage performance test

A lithium-ion battery is charged at a constant current of 0.5C at 25 °C until the voltage reaches 4.35 V, and then the lithium-ion battery is clamped by two metal sheets. The thickness of the lithium-ion battery is measured with a micrometer. The thickness of the lithium-ion battery at this time is defined as an initial thickness H₀ of the lithium-ion battery. Subsequently, the lithium-ion battery is stored in an 85 °C thermostat for 24 hours. The thickness of the lithium-ion battery is measured using the same method. The thickness of the lithium-ion battery after storage is defined as H₁. Thickness expansion rate of the battery after storing at 85 °C = (H1 - H0)/H0 × 100%.

Table 1 and Table 2 show parameters and evaluation results in Embodiments 1 to 38 and Comparative Embodiments 1 to 4.

**Table 1**

| | Molar fraction a of Li | Molar fraction b of Ni | Molar fraction c of Mn | b/a | b/c |
|---|---|---|---|---|---|
| Embodiment 1 | 1.02 | 0.51 | 0.51 | 0.5 | 1 |
| Comparative Embodiment 1 | 1.70 | 0.51 | 0.51 | 0.3 | 1 |
| Embodiment 2 | 1.28 | 0.51 | 0.51 | 0.4 | 1 |
| Embodiment 3 | 0.85 | 0.51 | 0.51 | 0.6 | 1 |
| Comparative Embodiment 2 | 0.73 | 0.51 | 0.51 | 0.7 | 1 |
| Comparative Embodiment 3 | 1.02 | 0.51 | 0.73 | 0.5 | 0.7 |
| Embodiment 4 | 1.02 | 0.51 | 0.64 | 0.5 | 0.8 |
| Embodiment 1 | 1.02 | 0.51 | 0.51 | 0.5 | 1 |
| Embodiment 5 | 1.02 | 0.51 | 0.43 | 0.5 | 1.2 |
| Comparative Embodiment 4 | 1.02 | 0.51 | 0.39 | 0.5 | 1.3 |
| Embodiment 6 | 1.02 | 0.51 | 0.51 | 0.5 | 1 |
| Embodiment 7 | 1.02 | 0.51 | 0.51 | 0.5 | 1 |
| Embodiment 8 | 1.02 | 0.51 | 0.51 | 0.5 | 1 |
| Embodiment 9 | 1.02 | 0.51 | 0.51 | 0.5 | 1 |
| Embodiment 10 | 1.02 | 0.51 | 0.51 | 0.5 | 1 |
| Embodiment 11 | 1.02 | 0.51 | 0.51 | 0.5 | 1 |
| Embodiment 12 | 1.02 | 0.51 | 0.51 | 0.5 | 1 |
| Embodiment 13 | 1.02 | 0.51 | 0.51 | 0.5 | 1 |
| Embodiment 14 | 1.02 | 0.51 | 0.51 | 0.5 | 1 |
| Embodiment 15 | 1.02 | 0.51 | 0.51 | 0.5 | 1 |
| Embodiment 16 | 1.02 | 0.51 | 0.51 | 0.5 | 1 |
| Embodiment 17 | 1.02 | 0.51 | 0.51 | 0.5 | 1 |
| Embodiment 18 | 1.02 | 0.51 | 0.51 | 0.5 | 1 |
| Embodiment 19 | 1.02 | 0.51 | 0.51 | 0.5 | 1 |
| Embodiment 20 | 1.02 | 0.51 | 0.51 | 0.5 | 1 |
| Embodiment 21 | 1.02 | 0.51 | 0.51 | 0.5 | 1 |
| Embodiment 22 | 1.02 | 0.51 | 0.51 | 0.5 | 1 |
| Embodiment 23 | 1.02 | 0.51 | 0.51 | 0.5 | 1 |
| Embodiment 24 | 1.02 | 0.51 | 0.51 | 0.5 | 1 |
| Embodiment 25 | 1.02 | 0.51 | 0.51 | 0.5 | 1 |
| Embodiment 26 | 1.02 | 0.51 | 0.51 | 0.5 | 1 |
| Embodiment 27 | 1.02 | 0.51 | 0.51 | 0.5 | 1 |
| Embodiment 28 | 1.02 | 0.51 | 0.51 | 0.5 | 1 |
| Embodiment 29 | 1.02 | 0.51 | 0.51 | 0.5 | 1 |
| Embodiment 30 | 1.02 | 0.51 | 0.51 | 0.5 | 1 |
| Embodiment 31 | 1.02 | 0.51 | 0.51 | 0.5 | 1 |
| Embodiment 32 | 1.02 | 0.51 | 0.51 | 0.5 | 1 |
| Embodiment 33 | 1.02 | 0.51 | 0.51 | 0.5 | 1 |
| Embodiment 34 | 1.02 | 0.51 | 0.51 | 0.5 | 1 |
| Embodiment 35 | 1.02 | 0.51 | 0.51 | 0.5 | 1 |
| Embodiment 36 | 1.02 | 0.51 | 0.51 | 0.5 | 1 |
| Embodiment 37 | 1.02 | 0.51 | 0.51 | 0.5 | 1 |
| Embodiment 38 | 1.02 | 0.51 | 0.51 | 0.5 | 1 |

**Table 2**

| | Fluorinated solvent | | Lithium salt additive | | Ester-based solvent | | I_{A}/I_{B} | Capacity retention rate after cycling at 45 °C for 400 cycles | Expansion rate after storing at 85 °C |
|---|---|---|---|---|---|---|---|---|---|
| | Compound | Content (wt%) | Compound | Content (wt%) | Compound | Content (wt%) | | | |
| Embodiment 1 | / | / | / | / | / | / | 1.82 | 70.9% | 19.1% |
| Comparative Embodiment 1 | / | / | / | / | / | / | 1.82 | 61.6% | 22.1% |
| Embodiment 2 | / | / | / | / | / | / | 1.82 | 70.0% | 19.2% |
| Embodiment 3 | / | / | / | / | / | / | 1.82 | 70.1% | 19.3% |
| Comparative Embodiment 2 | / | / | / | / | / | / | 1.82 | 62.5% | 21.7% |
| Comparative Embodiment 3 | / | / | / | / | / | / | 1.82 | 63.5% | 21.1 % |
| Embodiment 4 | / | / | / | / | / | / | 1.82 | 70.1% | 19.3% |
| Embodiment 1 | / | / | / | / | / | / | 1.82 | 70.9% | 19.1% |
| Embodiment 5 | / | / | / | / | / | / | 1.82 | 70.2% | 19.2% |
| Comparative Embodiment 4 | / | / | / | / | / | / | 1.82 | 64.5% | 20.9% |
| Embodiment 6 | Difluoroethylene carbonate | 70 | Lithium bis(oxalato)borate | 0.5 | Vinylene carbonate | 6.5 | 1.82 | 82.5% | 5.4% |
| Embodiment 7 | Difluoroethylene carbonate | 70 | / | / | / | / | 1.82 | 76.1% | 13.6% |
| Embodiment 8 | Fluoroethylene carbonate | 70 | / | / | / | / | 1.81 | 73.6% | 13.7% |
| Embodiment 9 | Diethyl fluorocarbonate | 70 | / | / | / | / | 1.85 | 72.4% | 13.1% |
| Embodiment 10 | Fluoroethyl methyl carbonate | 70 | / | / | / | / | 1.87 | 73.9% | 12.8% |
| Embodiment 11 | Difluoroethylene carbonate | 45 | / | / | / | / | 1.81 | 71.9% | 18.5% |
| Embodiment 12 | Difluoroethylene carbonate | 50 | / | / | / | / | 1.81 | 74.3% | 17.9% |
| Embodiment 13 | Difluoroethylene carbonate | 60 | / | / | / | / | 1.91 | 74.9% | 15.8% |
| Embodiment 14 | Difluoroethylene carbonate | 80 | / | / | / | / | 1.89 | 75.1% | 12.7% |
| Embodiment 15 | Difluoroethylene carbonate | 90 | / | / | / | / | 1.88 | 74.7% | 11.5% |
| Embodiment 16 | Difluoroethylene carbonate | 93 | / | / | / | / | 1.88 | 71.7% | 12.5% |
| Embodiment 17 | / | / | Lithium bis(oxalato)borate | 0.5 | / | / | 1.78 | 75.3% | 17.8% |
| Embodiment is | / | / | Lithium bis(fluorosulfonyl)i mide | 0.5 | / | / | 1.69 | 73.2% | 18.5% |
| Embodiment 19 | / | / | Lithium perchlorate | 0.5 | / | / | 1.62 | 74.9% | 18.1% |
| Embodiment 20 | / | / | Lithium difluoro(oxalato)bor ate | 0.5 | / | / | 1.58 | 72.8% | 19.3% |
| Embodiment 21 | / | / | Lithium bis(oxalato)borate | 0.1 | / | / | 1.62 | 72.1% | 19.5% |
| Embodiment 22 | / | / | Lithium bis(oxalato)borate | 0.3 | / | / | 1.75 | 73.8% | 19.1% |
| Embodiment 23 | / | / | Lithium bis(oxalato)borate | 0.7 | / | / | 1.77 | 75.8% | 18.3% |
| Embodiment 24 | / | / | Lithium bis(oxalato)borate | 0.9 | / | / | 1.81 | 76.0% | 18.6% |
| Embodiment 25 | / | / | Lithium bis(oxalato)borate | 1.1 | / | / | 1.82 | 71.8% | 19.6% |
| Embodiment 26 | / | / | / | / | Vinylene carbonate | 6.5 | 1.81 | 77.4% | 8.1% |
| Embodiment 27 | / | / | / | / | Polystyrene | 6.5 | 1.82 | 72.5% | 9.3% |
| Embodiment 28 | / | / | / | / | Ethylene sulfate | 6.5 | 1.82 | 73.1% | 9.2% |
| Embodiment 29 | / | / | / | / | Fluoroethylene carbonate | 6.5 | 1.82 | 72.8% | 10.7% |
| Embodiment 30 | / | / | / | / | Polyethersulfon e | 6.5 | 1.82 | 73.8% | 9.3% |
| Embodiment 31 | / | / | / | / | Succinonitrile | 6.5 | 1.82 | 74.2% | 10.1% |
| Embodiment 32 | / | / | / | / | Vinylene carbonate | 3.0 | 1.81 | 74.2% | 9.9% |
| Embodiment 33 | / | / | / | / | Vinylene carbonate | 5.0 | 1.81 | 75.9% | 9.2% |
| Embodiment 34 | / | / | / | / | Vinylene carbonate | 8.0 | 1.81 | 76.8% | 7.9% |
| Embodiment 35 | / | / | / | / | Vinylene carbonate | 10.0 | 1.81 | 76.3% | 7.3% |
| Embodiment 36 | Difluoroethylene carbonate | 70 | Lithium bis(oxalato)borate | 0.5 | / | / | 1.81 | 79.4% | 10.7% |
| Embodiment 37 | / | / | Lithium bis(oxalato)borate | 0.5 | Vinylene carbonate | 6.5 | 1.81 | 80.7% | 7.4% |
| Embodiment 38 | Difluoroethylene carbonate | 70 | / | / | Vinylene carbonate | 6.5 | 1.81 | 81.2% | 6.1% |

As can be seen from Embodiments 1 to 3 versus Comparative Embodiments 1 to 2, when the value of b/a is 0.4 to 0.6, the cycle capacity retention rate and high-temperature storage expansion rate of the lithium-ion battery are superior.

As can be seen from Embodiment 1 and Embodiments 4 to 5 versus Comparative Embodiments 3 to 4, when the value of b/c is 0.8 to 1.2, the cycle capacity retention rate and high-temperature storage expansion rate of the lithium-ion battery are superior.

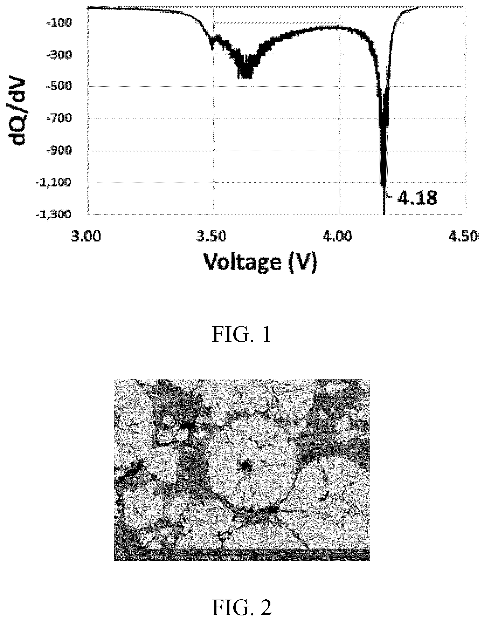

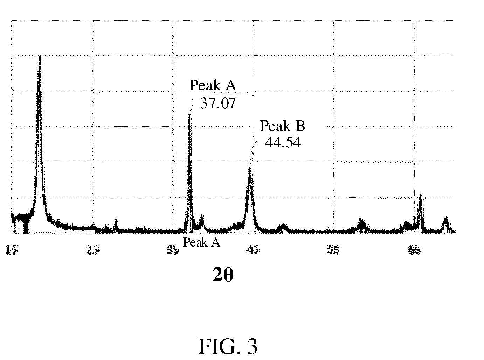

As can be seen from comparison of Embodiments 6 to 38, when a fluorinated solvent, an ester-based solvent, and a lithium salt are added to the electrolyte solution, the cycle capacity retention rate and high-temperature storage expansion rate of the lithium-ion battery are improved most effectively. FIG. 1 is a discharge curve of an electrochemical device according to Embodiment 6 of this application; FIG. 2 is a cross-section polishing scanning electron microscope (SEM) image of a positive electrode plate according to Embodiment 6 of this application; and FIG. 3 is an X-ray diffraction (XRD) pattern of a positive electrode plate of an electrochemical device in a fully charged state according to Embodiment 6 of this application.

Embodiments 7 to 10 show that different fluorinated solvents in use can improve the cycle capacity retention rate and the high-temperature storage expansion rate of the lithium ion battery to varying degrees. As can be seen from comparison of Embodiment 8 and Embodiments 11 to 16, when the mass percent of the fluorinated solvent in the electrolyte solution is 50% to 90%, the cycle capacity retention rate and high-temperature storage expansion rate of the lithium-ion battery are improved more effectively.

Embodiments 17 to 20 show that different lithium salts in use can improve the cycle capacity retention rate and the high-temperature storage expansion rate of the lithium ion battery to varying degrees. As can be seen from comparison of Embodiment 17 and Embodiments 21 to 25, when the mass percent of the lithium salt in the electrolyte solution is 0.1% to 1%, the cycle capacity retention rate and high-temperature storage expansion rate of the lithium-ion battery are improved more effectively.

Embodiments 26 to 31 show that different ester-based solvents in use can improve the cycle capacity retention rate and the high-temperature storage expansion rate of the lithium ion battery to varying degrees. As can be seen from comparison of Embodiment 26 and Embodiments 32 to 35, when the mass percent of the ester-based solvent in the electrolyte solution is 2% to 10%, the cycle capacity retention rate and high-temperature storage expansion rate of the lithium-ion battery are improved effectively.

As can be seen from Embodiments 36 to 38, when the electrolyte solution includes two of the fluorinated solvent, the ester-based solvent, or the lithium salt, the cycle capacity retention rate and high-temperature storage expansion rate of the lithium-ion battery are improved more effectively than the case where the electrolyte solution includes only one thereof.

Described above are merely preferred embodiments of this application and the technical principles thereof. A person skilled in the art understands that the scope of disclosure in this application is not limited to the technical solutions formed by a specific combination of the foregoing technical features, but encompasses other technical solutions formed by any combination of the foregoing technical features or equivalents thereof, for example, a technical solution formed by replacing any of the foregoing features with a technical feature disclosed herein and serving similar functions.

## Claims

1. An electrochemical device, **characterized in that** the electrochemical device comprises a positive electrode plate, the positive electrode plate comprises a positive active material layer, the positive active material layer comprises a positive active material, and the positive active material contains three elements Li, Ni, and Mn; and
a molar fraction of Li in the positive active material is a, a molar fraction of Ni in the positive active material is b, a molar fraction of Mn in the positive active material is c, a value of b/a is 0.4 to 0.6, and a value of b/c is 0.8 to 1.2.

2. The electrochemical device according to claim 1, **characterized in that** the value of b/c is 1 to 1.2.

3. The electrochemical device according to claim 1, **characterized in that** a dQ/dV-V curve of the electrochemical device during discharge exhibits at least one peak at a voltage greater than or equal to 4.1 V.

4. The electrochemical device according to claim 1, **characterized in that** the electrochemical device further comprises an electrolyte solution; and the electrolyte solution comprises at least one of a fluorinated solvent, an ester-based solvent, or a lithium salt additive;
the fluorinated solvent comprises at least one of fluoroethylene carbonate, difluoroethylene carbonate, fluorodiethyl carbonate, fluoroethyl methyl carbonate, trifluoropropylene carbonate, or fluorodimethyl carbonate;
the ester-based solvent comprises at least one of ethylene carbonate, diethyl carbonate, ethyl methyl carbonate, propylene carbonate, or dimethyl carbonate; and
the lithium salt additive comprises at least one of lithium bis(fluorosulfonyl)imide, lithium bis(oxalato)borate, lithium difluoro(oxalato)borate, or lithium perchlorate.

5. The electrochemical device according to claim 4, **characterized in that**, the electrolyte solution comprises the fluorinated solvent; based on a total mass of the electrolyte solution, a mass percent of the fluorinated solvent is 50% to 90%.

6. The electrochemical device according to claim 5, **characterized in that**, based on the total mass of the electrolyte solution, the mass percent of the fluorinated solvent is 50% to 80%.

7. The electrochemical device according to claim 4, **characterized in that**, the electrolyte solution comprises the ester-based solvent; based on a total mass of the electrolyte solution, a mass percent of the ester-based solvent is 2% to 10%.

8. The electrochemical device according to claim 4, **characterized in that**, the electrolyte solution comprises the lithium salt additive; based on a total mass of the electrolyte solution, a mass percent of the lithium salt additive is 0.1% to 1%.

9. The electrochemical device according to claim 1, **characterized in that**, in an X-ray diffraction of the positive electrode plate in a fully charged state of the electrochemical device, a diffraction peak A is exhibited in a diffraction angle range of 36.3° to 37.3°, a peak intensity of the diffraction peak A is I_{A}, a diffraction peak B is exhibited in a diffraction angle range of 43.6° to 44.6°, a peak intensity of the diffraction peak B is I_{B}, and a value of I_{A}/I_{B} is 1.5 to 2.

10. The electrochemical device according to claim 1, **characterized in that** the positive active material is a secondary particle formed by aggregation of primary particles, and an average diameter of the positive active material is 8 µm to 12 µm.

11. The electrochemical device according to claim 1, **characterized in that**, after the electrochemical device is discharged, the positive active material comprised in the positive electrode plate in a fully discharged state of the electrochemical device comprises an M element, a molar fraction of the M element in the positive active material is d, the M element comprises at least one of Na, K, or Mg; an aggregate molar fraction of Ni, Co, and Mn in the positive active material is e, and a value of d/e is 0.1 to 0.2.

12. An electronic device, comprising the electrochemical device according to any one of claims 1 to 10.
